# EUROPÄISCHE PATENTSCHRIFT

(11) **EP 0 280 204 B1**
(45) Veröffentlichungstag und Bekanntmachung des Hinweises auf die Patenterteilung: **03.08.1994**
(21) Anmeldenummer: 88102414.5
(22) Anmeldetag: 19.02.1988
(51) Int. Cl.: B29C 57/00

(54) **Verfahren und Vorrichtung zum Anformen eines Flansches an einem Hohlkörper aus thermoplastischem Kunststoff**
Process and apparatus for forming a flange on a hollow thermoplastics article
Procédé et appareil pour le formage d'un flanc à un corps creux en matière thermoplastique

(30) Priorität: 25.02.1987 DE 3705948
(43) Veröffentlichungstag der Anmeldung: 31.08.1988
(73) Patentinhaber: KRUPP CORPOPLAST MASCHINENBAU GMBH, 22123 Hamburg (DE)
(72) Erfinder: Albrecht, Peter, D-2050 Hamburg 80 (DE); Appel, Adolf, D-2111 Egestorf (DE); Balkau, Karl-Heinz, D-2000 Oststeinbek (DE); Horwege, Claus, D-2000 Hamburg 76 (DE); Reymann, Wolfgang, D-2000 Hamburg 67 (DE); Rose, Peter, Maryland 20854 (US); Vogel, Klaus, D-2000 Barsbüttel (DE); Wiedenfeld, Walter, D-2000 Hamburg 62 (DE)
(74) Vertreter: Klickow, Hans-Henning

(56) Entgegenhaltungen:
- WO-A-82/00785
- WO-A-86/03713
- US-A- 4 412 966
- US-A- 4 420 454

## Beschreibung

Die Erfindung betrifft ein Verfahren zum Anformen eines Flansches an einen Hohlkörper aus thermoplastischem Kunststoff, dessen im wesentlichen zylindrische Wandung an einem Ende eine Öffnung begrenzt und bei dem der die Öffnung begrenzende Endabschnitt der Wandung erwärmt und durch über den Umfang des Endabschnittes von außen auf diesen einwirkende Kräfte verengt wird und danach an diesen verengten Endabschnitt durch einen Preßvorgang ein umlaufender Flansch angeformt wird.

Die Erfindung betrifft darüber hinaus eine Vorrichtung zum Anformen eines Flansches an einen Hohlkörper aus thermoplastischem Kunststoff, dessen im wesentlichen zylindrische Wandung an einem Ende eine Öffnung begrenzt, bei der zum Verengen des die Öffnung begrenzenden Endabschnittes der Wandung ein über den Endabschnitt führbares im Querschnitt ringförmiges erstes Werkzeug vorgesehen ist, dessen Innendurchmesser an der dem Hohlkörper zugekehrten Stirnseite mindestens so groß ist wie der Außendurchmesser des unverformten Endabschnittes des Hohlkörpers und entsprechend der Kontur des verengten Endabschnittes zu seiner vom Hohlkörper abgekehrten Seite abnimmt, und bei der zur Flanschanformung ein den verengten Endabschnitt teilweise wieder aufweitendes zweites Werkzeug vorgesehen ist.

Bei dem mit dem Flansch zu versehenden Hohlkörper kann es sich zum Beispiel um einen hohlen, im wesentlichen zylindrischen und mit einem Boden versehenen dosenförmigen Formling handeln, wobei der anzubringende Flansch die Funktion eines Bördelrandes hat, der zum Anbringen eines Deckels dient. Der mit dem Flansch zu versehene Formling kann unter Anwendung unterschiedlicher Verfahren hergestellt worden sein, von denen eines darin besteht, daß ein beispielsweise im Spritzgießverfahren hergestellter Vorformling, der eine im wesentlichen zylindrische Wandung, einen Boden und am anderen Ende eine Öffnung aufweist, durch Strecken der Wandung unter der Glasumwandlungstemperatur des den Vorformling bildenden Materials zu einem Zwischenerzeugnis umgeformt wird, welches dann an seinem offenen Ende vor-aufgeweitet und danach, ausgehend von diesem offenen, vor-aufgeweiteten Ende, zumindest über den größten Teil seiner Längserstreckung aufgeweitet und dann thermofixiert wird, worauf dann der vorerwähnte Flansch oder Bördelrand angeformt wird. Es ist aber auch möglich, einen derartigen dosenförmigen Hohlkörper unter Anwendung des Streck-Blasverfahrens herzustellen, wobei in einer Blasform ein zunächst im wesentlichen geschlossener Hohlkörper hergestellt wird, worauf zur Herstellung der Öffnung der dem Boden abgewandte Endbereich des Formlings abgetrennt wird. In beiden Fällen entsteht ein Erzeugnis, bei dem zumindest das die Wandung bildende Material zur Verbesserung seiner mechanischen Eigenschaften orientiert ist.

Unabhängig von der Art der Herstellung des mit einem Flansch zu versehenen Hohlkörpers und auch unabhängig von der weiteren Verwendung eines solchen Hohlkörpers wird es sich bei dem Enderzeugnis in den meisten Fällen um einen Massenartikel handeln, der in großen Stückzahlen zu fertigen ist, so daß der Ablauf des Verfahrens und die zu seiner Ausführung benutzte Vorrichtung möglichst einfach und übersichtlich und damit zuverlässig sein sollten.

Aus der WO-A-86/03 713 ist bereits ein gattungsbildendes Verfahren bekannt. In aufeinander folgenden separaten Produktionsschritten erfolgt zunächst eine Erwärmung des Endabschnittes des Hohlkörpers, danach wird der Kohlkörper relativ zum Verengungswerkzeug ausgerichtet und anschließend der Verengungsvorgang durchgeführt. Die Verengungsvorrichtung ist im wesentlichen glockenförmig ausgebildet und nimmt den Hohlkörper vollständig auf.

Aus der US-A-4 412 966 ist es bekannt, einen Mündungsabschnitt eines Behälters durch Einführen eines Expansionsdornes aufzuweiten. Vor der Durchführung des Aufweitvorganges wird eine separate Beheizung durchgeführt. Durch die Aufweitung mit Hilfe des Expansionsdornes wird eine Orientierung des Materials im Mündungsbereich vorgenommen.

Der Erfindung liegt die Aufgabe zugrunde, das Verfahren und die Vorrichtung der einleitend beschriebenen Art so auszugestalten, daß eine wirtschaftliche Massenfertigung möglich ist. Die durchzuführenden Berarbeitungsvorgänge sollen nach Möglichkeit so aufeinander abgestimmt sein, daß eine optimale Nutzung der für die Behandlung der Hohlkörper erforderlichen Werkzeuge und sonstigen Einrichtungen möglich ist. Die einzelnen Arbeitsschritte sollen so ablaufen und aufeinander abgestimmt sein, daß die notwendigen Formgebungsvorgänge möglichst wenig Temperiervorgänge und -einrichtungen erfordern. Entsprechendes gilt auch für die räumliche Anordnung der für die Formgebungsvorgänge erforderlichen Werkzeuge zueinander. Ferner soll es möglich sein, daß der größte Durchmesser des anzuformenden Flansches und auch der des daran ggf. anzubringenden Deckels nicht größer ist als der Außendurchmesser des zylindrischen Bereichs des Hohlkörpers.

Zur Lösung dieser Aufgabe schlägt die Erfindung bezüglich der Vorrichtung vor, daß das Werkzeug mit einer Heizeinrichtung versehen ist und daß das erste Werkzeug in Richtung einer Längsachse des Hohlkörpers in seinem den Hohlkörper umfassenden Bereich eine geringere Ausdehnung als der Hohlkörper aufweist.

Bezüglich des Verfahrens wird die Aufgabe erfindungsgemäß dadurch gelöst, daß zum Verengen des Endabschnittes des Hohlkörpers über den Endabschnitt ein im Querschnitt im wesentlichen ringförmiges erstes Werkzeug geführt wird, das in seinem den Hohlkörper umfassenden Bereich in Richtung einer Längserstreckung des Hohlkörpers eine geringere Ausdehnung als der Hohlkörper aufweist, daß das Werkzeug auf eine zur Erwärmung des Endabschnittes ausreichende Temperatur gebracht und durch ein Verschieben des Werkzeuges in Richtung auf den Hohlkörper etwa gleichzeitig die Erwärmung und die Verengung durchgeführt wird.

Vorteilhaft wird dabei so vorgegangen, daß das Verengen des Endabschnitts gleichzeitig mit dem Erwärmen desselben und in Abhängigkeit von dem dadurch bewirkten Erweichen des den Endabschnitt bildenden Materials erfolgt. Dies kann in der Weise geschehen, daß über den Endabschnitt ein im Querschnitt im wesentlichen ringförmiges erstes Werkzeug geführt wird, dessen innere Kontur sich entsprechend der am Endabschnitt durchzuführenden Verengung zu seinem dem Hohlkörper abgekehrten Ende hin verengt, wobei das Werkzeug unter der Einwirkung eines in Richtung auf den Hohlkörper wirkenden Federmittels steht und eine zum Erweichen des zuverengenden Bereichs geeignete Temperatur aufweist und die durch das Federmittel auf das Werkzeug ausgeübte Kraft so bemessen ist, daß eine das Verengen des Endbereichs bewirkende Verformung erst bei Erreichen einer bestimmten Temperatur und einer davon abhängigen Erweichung des unter der Einwirkung des Werkzeugs stehenden Endbereichs der Wandung eintritt.

Insbesondere bei diesem Behandlungsschritt ist zu berücksichtigen, daß der Hohlkörper insbesondere dann, wenn er als dosenförmiger Behälter verwendet wird, im allgemeinen sehr dünnwandig sein wird, so daß die am Hohlkörper angreifenden Kräfte in jedem Fall so dosiert und verteilt sein müssen, daß ungewollte und insbesondere unregelmäßige Verformungen, wie beispielsweise Faltenbildung durch Stauchung, in jedem Fall vermieden werden. Dies gilt insbesondere bei solchen Formgebungsvorgängen, bei denen der Formling nicht über seine gesamte Erstreckung durch besondere Stütz- und Haltelemente derartig abgestützt und gehalten wird, daß Verformungen des Hohlkörpers nur dann und dort erfolgen können, wenn beziehungsweise wo die Stütz- und Haltelemente die zu verformenden Bereich des Formlings für die Durchführung des Formgebungsvorganges freigeben, die übrigen Bereiche aber stützen und halten. Die vorbeschriebene Verfahrensweise gemäß der Erfindung hat den Vorteil, daß eine verhältnismäßig geringe Kraft ausreicht, die vom im Querschnitt ringförmigen Werkzeug auf den Endabschnitt der Wandung des Hohlkörpers zur Einwirkung kommt, um diesen Endabschnitt zu verengen. Der Ablauf dieses Verformungsvorganges erfolgt dabei ohne Zwangssteuerung derart, daß der Erweichungsgrad des zu verengenden Endabschnittes bei gegebener auf das Werkzeug einwirkender Kraft den Ablauf bestimmt. Es kann somit auf einen Zwangsantrieb des Werkzeugs verzichtet werden, wobei möglicherweise von Hohlkörper zu Hohlkörper gewisse Schwankungen bezüglich der Dauer des Verengungsvorganges auftreten können, wenngleich diese sehr gering bleiben unter der Voraussetzung, daß die Wandstärke des zu verengenden Abschnittes keinen oder nur geringen Schwankungen unterliegt. Um die Länge des verengten Endabschnitts in jedem Fall von Hohlkörper zu Hohlkörper konstant zu halten, ist es zweckmäßig, daß der vom Werkzeug während des Verengens zurückzulegende Weg, z. B. durch einen Anschlag, begrenzt wird.

In jedem Fall ist es vorteilhaft, daß während des die Verengung bewirkenden Arbeitsschritts der Hohlkörper unter einem inneren Überdruck steht. Dies kann durch Druckluft geschehen, die zweckmäßig durch einen im für das Verengung benutzten Werkzeug befindlichen Kanal in den Hohlkörper eingeführt wird.

Der zweite Verformungsschritt, bei welchem der Flansch am verengten Endabschnitt des Hohlkörpers angeformt wird, erfolgt vorteilhaft unter Ausnutzung der Wärme, die im Verlauf des ersten Arbeitsschritts zur Verengung des Endabschnitts in letzteren eingebracht worden war. Dies ist jedenfalls dann möglich, wenn die einzelnen Arbeitsschritte so aufeinander abgestimmt sind, daß zwischen dem Ende des Verengungsvorganges und dem Preßvorgang zum Anbringen des Flansches nur eine kurze Zeitspanne liegt. Diese Verfahrensweise wird auch durch die Tatsache begünstigt, daß im ersten Verfahrensschritt das Temperieren, also Erwärmen des Endabschnittes durch das erste im Querschnitt ringförige Werkzeug erfolgt, welches bis zum Ende dieses Vorgebungsvorganges in Kontakt mit dem Endabschnitt bleibt und somit auch bis zum Ende des Verengungsvorganges Wärme auf den Endabschnitt des Hohlkörpers überträgt.

Zum Anformen des Flansches kann der Hohlkörper mit seinem verengten Endabschnitt in den Bereich eines zweiten Werkzeugs gebracht werden das aus einem Unterteil mit einer Ausnehmung, deren Innenkontur an die Form des am Hohlkörper anzuformenden Flansches angepaßt ist, und einem Stempel besteht, dessen Endbereich in die Ausnehmung des Unterteils und den darin befindlichen Endabschnitt des Hohlkörpers eingeführt wird, und der mit der Hohlkörperwandung zuammenwirkende Bereich des Stempels so geformt ist, daß er beim Einführen den Endabschnitt des Hohlkörpers zunächst aufweitet und in der Endphase des Einführens der umlaufende Flansch zwischen Unterteil und Stempel preßgeformt und der verformte Bereich des Hohlkörpers soweit abgekühlt wird, daß er eine ausreichende Formstabilität erhält. Dabei kann das für das Anformen des Flansches verwendete Preßwerkzeug zugleich zur Abkühlung des verformten Bereichs der Wandung dienen. Im Bedarfsfall kann wenigstens eines der beiden Preßwerkzeuge gekühlt werden, beispielsweise durch eine in einem innerhalb des Preßwerkzeugs angeordnetes Kanalsystem geführte Kühlflüssigkeit. Ob eine solche besondere Kühlung notwendig oder zweckmäßig ist, hängt von den jeweiligen Umständen, z. B. von der Wanddicke des Hohlkörpers und damit von der Menge der abzuführenden Wärme ab. . Wenn der Hohlkörper vor den Verengungsvorgang einem Thermofixiervorgang unterzogen worden war, um ihm die für seine zukünftige Verwendung erforderliche Thermostabilität zu geben, sollten das Verengen des Endabschnitts des Hohlkörpers und das anschließende Preßformen des Flansches bei einer Temperatur erfolgen, die oberhalb der Thermofixiertemperatur liegt. Letztere kann bei Verwendung von beispielsweise PETP bei etwa 150° C liegen.

Im allgemeinen wird es zweckmäßig sein, daß der Hohlkörper während des Preßformens des Flansches unter innerem Überdruck steht. Dadurch soll vermieden werden, daß die Wandung des Hohlkörpers unter der Einwirkung der für das Preßformen erforderlichen Kräfte oder eine andere ungewollte und kontrollierbare Verformung erfährt. Daraüber hinaus kann es vorteilhaft sein, während des Preßformens des Flansches die Hohlkörperwandung außenseitig durch eine sie umgebende Stützwandung abzustützen, so daß ein Ausbeulen des unter Überdruck stehenden Hohlkörpers vermieden wird. Die Verwendung einer solchen Stützwandung wird im allgemeinen abhängen von der Dicke der Hohlkörperwandung, da die Steifigkeit der letzteren mit zunehmender Wanddicke des Hohlkörpers größer wird.

Zur Erzielung einer hohen Produktivität ist es vorteilhaft, das Verengen des Endabschnittes des Hohlkörpers einerseits und das Preßformen dieses Flansches in zwei räumlich voneinander getrennten Behandlungsstationen durchzuführen, so daß beispielsweise in der eine Station der Endabschnitt eines Hohlkörpers verengt wird und gleichzeitig in der anderen Station an dem voraufgegangenen Hohlkörper der Flansch angeformt wird.

Die Vorrichtung zur Durchführuno des vorbeschriebenen Verfahrens ist zum Verengen des die Öffnung begrenzenden Abschnitts der Wandung des Hohlkörpers mit einem über den Endabschnitt zu führenden, beheizten, im Querschnitt ringförmigen ersten Werkzeug versehen, dessen Innendurchmesser an der dem Hohlkörper zugekehrten Stirnseite mindestens so groß ist wie der Außendurchmesser des unverformten Endabschnittes des Hohlkörpers und zu seiner vom Hohlkörper abgekehrten Seite hin abnimmt. Dieses erste Werkzeug kann zur besseren Handhabung, insbesondere aber auch zum Einführen von Druckluft in den Hohlkörper, an seiner dem Hohlkörper abgekehrten Seite verschlossen und mit einer Zuführung für Druckluft versehen sein. D. h., daß dieses im Querschnitt ringförmige erste Werkzeug etwa hauben- oder glockenförmig ausgebildet sein kann, wobei der Innenraum dieser Haube oder Glocke in der mit dem zu verengenden Endabschnitt des Hohlörpers zusammenwirkenden Position eine Fortsetzung des Innenraums des Hohlkörpers darstellt und der Gesamtraum durch das Werkzeug nach oben geschlossen ist, so daß ein im Gesamtraum erzeugter Überdruck durch Zuführen von Druckluft aufrechterhalten bleibt.

Als besonders vorteilhaft hat sich eine Ausführung herausgestellt, bei welcher das im Querschnitt ringförmige erste Werkzeug von der Kolbenstange eines Kolbens getragen wird, der innerhalb eines durch Druckluft beaufschlagten Zylinders geführt ist. Die Beaufschlagung des Kolbens ist dabei so gewählt, daß die resultierende, in Richtung auf den Hohlkörper wirkende Kraft einerseits ausreicht, den Endabschnitt bei ausreichender Erwärmung und dadurch bewirkter Erweichung zu verengen, andererseits jedoch keine unzulässigen Verformungen in den übrigen, nicht erwärmten Bereichen des Hohlkörpers bewirkt.

Zum Anformen des Flansches an dem verengten Endabschnitt ist ein zweites Werkzeug vorgesehen, das aus einem Unterteil mit einer kreisförmigen Ausnehmung, deren Begrenzung an die Kontur des anzuformenden Flansches angepaßt ist, sowie einem Stempel besteht, dessen dem Hohlkörper zugekehrter Endbereich in die Ausnehmung des Unterteils und den vom Unterteil umgebenden Endabschnitt des Hohlkörpers einführbar und so geformt ist, daß er an den Bereich des Unterteils angepaßt ist, welches den verengten Endabschnitt des Hohlkörpers und den daraus zu formenden Flansch außenseitig umgibt. Zweckmäßig ist der Stempel mit Mitteln zum Einführen von Druckluft in den Hohlkörper versehen. Der durch die Druckluft bewirkte Überdruck stützt die Wandung des Hohlkörpers innenseitig ab. Ferner ist es möglich, eine zum Hohlkörper koaxial angeordnete Hülse vorzusehen, deren Innendurchmesser an den Außendurchmesser des Hohlkörpers angepaßt ist, und die Hülse relativ zum Hohlkörper axial verschiebbar ist und in eine Position gebracht werden kann, in welcher sie die Hohlkörperwandung über zumindest den größten Teil ihrer axialen Erstreckung passend umgibt, um so auch eine außenseitige Abstützung der Hohlkörperwandung zu bewirken.

Das Unterteil des Werkzeugs zum Anformen des Flansches ist vorteilhaft zum Zwecke des Entformens geteilt, wobei am Stempel diesem gegenüber axial verschiebbar ein ringförmiges Verriegelungselement angebracht sein kann, welches im Zuge der Bewegung des Stempels in Richtung auf das Unterteil mit beiden Teilen des Unterteils in Eingriff gebracht wird, bevor das Unterteil im Zuge des Formgebungsvorganges durch Kräfte durch den Stempel beaufschlagt wird. In gleicher Weise kann auch die zur außenseitigen Abstützung des Hohlkörpers dienende Hülse in ihrer wirksamen Lage mit dem Unterteil des Werkzeugs in Eingriff gebracht werden, um so eine zusätzliche Verriegelung zu bewirken, die ein Öffnen des Unterteils während des Preßformens des Flansches verhindert.

Es ist zweckmäßig, das erste, im Querschnitt ringförmige Werkzeug zum Verengen des Endabschnittes einerseits und das zweite Werkzeug zum Ausformen des Flansches andererseits in zwei in einen Abstand voneinander aufweisenden Behandlungsstation anzuordnen, so daß in jeder der Behandlungsstationen jeweils ein Hohlkörper behandelt werden kann. Der zweckmäßig horizontale Abstand zwischen beiden Stationen sollte möglichst kurz sein, so daß der Transport von der ersten Station, in welcher die Verengung durchgeführt wird, in die zweite Station, in welcher der Flansch angeformt wird, wenig Zeit beansprucht.

In der Zeichnung ist als Ausführungsbeispiel der Erfindung eine Vorrichtung zum Herstellen von Dosen dargestellt. Es zeigen:
- Fig. 1: die Seitenansicht eines Hohlkörpers aus thermoplastischem Kunststoff in Gestalt eines ein Zwischenerzeugnis darstellender Formlings für die Herstellung von Dosen vor Durchführung der Behandlungsschritte gemäß der Erfindung,
- Fig. 2: die Seitenansicht des Formlings gemäß Fig. 1 nach Durchführung des ersten Behandlungsschritts mit verengtem Endabschnitt,
- Fig 3: die Seitenansicht des Formlings gemäß Fig. 1 und 2 nach Durchführung des zweiten Behandlungsschrittes mit daran angeformtem Bördelflansch,
- Fig. 4: im Schema die Seitenansicht des Formlings in einer ersten Behandlungsstation mit dem Behandlungswerkzeug in seiner Ausgangsposition,
- Fig. 5: eine der Fig. 4 entsprechende Darstellung mit dem Werkzeug in einer Zwischenposition,
- Fig. 6: eine der Fig. 5 entsprechende Darstellung mit dem Werkzeug in einer weiteren Zwischenposition,
- Fig. 7: eine der Fig. 5 entsprechende Darstellung mit dem Werkzeug in seiner Endposition,
- Fig. 8: einen Längsschnitt des Formlings während des Einbringens in die zweite Behandlungsstation,
- Fig. 9: eine der Fig. 8 entsprechende Darstellung eines Zwischenstadiums beim Einbringen,
- Fig. 10: eine der Fig. 8 entsprechende Darstellung mit dem Formling in der zweiten Behandlungsstation und den Werkzeugen der zweiten Behandlungsstation in ihrer jeweiligen Ausgangsposition,
- Fig. 11: eine der Fig. 10 entsprechende Darstellung mit den beiden Werkzeugen in ihrer jeweiligen Endstellung,
- Fig. 12: eine Ansicht des unteren Werkzeugs der Fig. 11 in Richtung der Pfeile XII-XII,
- Fig. 13: einen Ausschnitt aus Fig. 10 in größerem Maßstab,
- Fig. 14: eine der Fig. 13 entsprechende Darstellung mit den zusammenwirkenden Teilen der beiden Werkzeuge in einer Zwischenposition,
- Fig. 15: die in den Fig. 13 und 14 dargestellten Teile in einer weiteren Zwischenposition,
- Fig. 16: die in den Fig. 12 -1 4 dargestellten zusammenwirkenden Teile in ihrer Endposition.

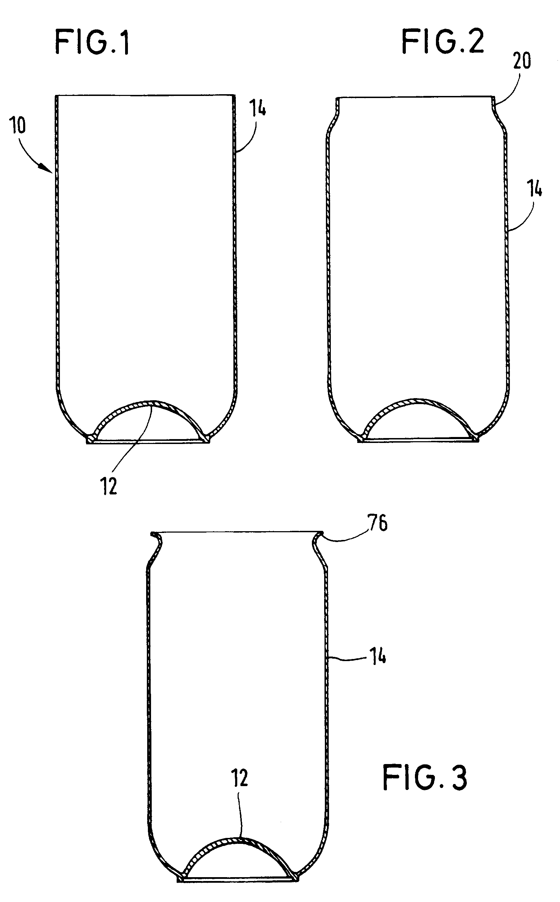

Die gemäß dem Verfahren nach der Erfindung zu behandelnden Hohlkörper bzw. Formlinge weisen bei dem im folgenden beschriebenen Ausführungsbeispiel die in Fig. 1 der Zeichnung dargestellte Gestalt auf. Jeder Formling 10 besteht im wesentlichen aus einem nach innen eingezogenen, kalottenförmigen Boden 12 und einer zylindrischen Wandung 14, deren oberes, freies Ende eine Öffnung begrenzt. Der Formling 10 kann als Zwischenerzeugnis aus einem Vorformling unter Anwendung eines Ziehvorganges und eines anschließenden Aufweitvorganges hergestellt worden sein, wie er beispielsweise in der FR-OS 25 67 066/85 10215 beschrieben ist. Die Wandung des Formlings 10 weist eine Stärke von beispielsweise 0,4 bis 0,5 mm auf. Der Boden 12 des Formlings ist merklich dicker, da er durch die vorangegangenen Formgebungsvorgänge, die jeweils zu einer Verringerung der Dicke der Wandung 14 geführt haben, nicht beeinflußt worden ist. Die Wandung 14 eines in der vorbeschriebenen Weise hergestellten Formlings 10 ist durch den Ziehvorgang in axialer Richtung orientiert. Eine Orientierung des die Wandung bildenden Materials in Umfangsrichtung erfolgt durch den an den Ziehvorgang anschließenden Aufweitvorgang.

Es ist aber auch möglich, den Formling 10 durch einen Streck-Blasvorgang herzustellen, wie er z. B. in der DE-B 2 222 535 beschrieben ist. Dabei wird eine Orientierung des die Wandung 14 bildenden Materials durch einen axialen Streckvorgang und die Orientierung dieses Materials in Umfangsrichtung durch den im allgemeinen durch inneren Überdruck bewirkten Aufweitvorgang verursacht.

Der in Fig. 1 dargestellte Formling wird in zwei aufeinanderfolgenden Behandlungsschritten jeweils einem Formgebungsvorgang unterzogen. Dazu wird der Formling 10 zunächst in eine erste Behandlungsstation 16 gebracht, in welcher er sich unterhalb eines ersten Werkzeugs 15 und zu diesem im wesentlichen axial ausgerichtet befindet. Dieses Werkzeug 15 ist im Querschnitt ringförmig ausgebildet und oberseitig verschlossen, so daß es eine glocken- oder haubenförmige Gestalt aufweist, wobei die Öffnung 17 der Haube oder Glocke dem Formling 10 zugekehrt ist. Der Innendurchmesser des Werkzeugs 15 nimmt von seiner Öffnung 17 in Richtung auf seine gegenüberliegende, verschlossene Seite derart ab, daß die Kontur der inneren Begrenzung der Wandung 18 der Kontur des am Formling 10 herzustellenden verengten Endabschnittes 20 angepaßt ist.

Das Werkzeug 15 wird von der Kolbenstange 21 eines Kolbens 22 getragen, der innerhalb eines pneumatischen Zylinders 24 geführt und während des Formens des verengten Endabschnittes 20 am Formling 10 in Richtung auf letzteren druckbeaufschlagt ist. Ferner ist der nach unten offene Innenraum des Werkzeugs 15 an eine Druckluftquelle anschließbar. Zu diesem Zweck ist ein Kanal 26 für die Zuleitung von Druckluft vorgesehen. Die Zuführung erfolgt über die Schlauchleitung 38.

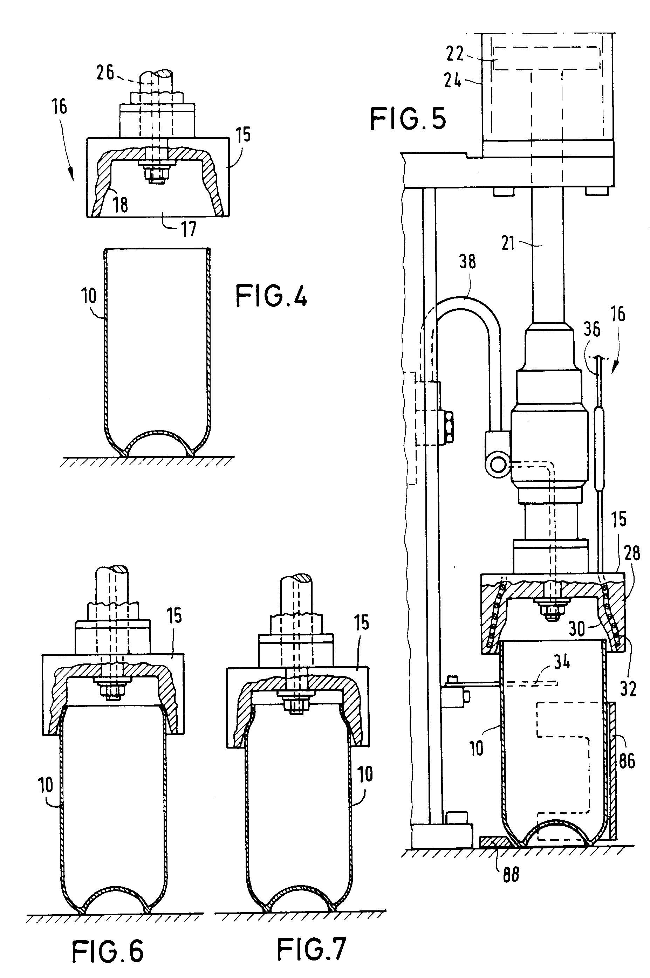

Das Werkzeug 15 besteht im wesentlichen aus einem äußeren Mantel 28 und einem inneren Teil 30, das koaxial zum Mantel 28 angeordnet ist. (Fig. 5). Zwischen beiden Teilen 28, 30 ist ein Draht 32 angeordnet, der als elektrischer Heizwiderstand zur Erwärmung des inneren Teiles 30 dient. Der Anschluß des Heizwiderstands 32 an eine Spannungsquelle erfolgt über eine Leitung 36.

Der durch einen Tansportschieber 86 in die erste Behandlungsstation 16 gebrachte Formling 10 wird dort durch den Transportschieber 86, einen Anschlag 88 und eine Gabel Gabel 34 (Fig. 5) zum Werkzeug 15 ausgerichtet. Letzteres wird zur Durchführung des ersten Formgebungsschritts, bei welchem der obere Endabschnitt 20 des Formlings verengt wird, aus seiner in Fig. 4 dargestellten Ausgangslage auf den Formling 10 abgesenkt. Der Innendurchmesser der Öffnung 17 des Werkzeugs 15 ist an dessen freiem Ende etwas größer als der Außendurchmesser des im wesentlichen zylindrischen Formlings 10. Im Verlauf der Absenkbewegung des Werkzeugs 15 erfolgt zunächst eine Feinausrichtung des Formlings 10, so daß dieser, nachdem im Zuge der Absenkbewegung eine erste Berührung zwischen der Endabschnitt 20 und der inneren Begrenzungswandung 18 des Werkzeugs 15 stattgefunden hat, der Formling 10 genau koaxial zum Werkzeug 15 ausgerichtet ist. Im Verlauf dieses Ausrichtens in der ersten Phase der Abwärtsbewegung des Werkzeugs 15 werden kaum axiale Kräfte auf den Formling 10 einwirken, der, wie bereits erwähnt, sehr dünnwandig ist. Spätestens nach der ersten Berührung zwischen Werkzeug 15 und dem Endbereich 21 des Formlings 10 wird durch die Kanal 26 Druckluft in den Formling 10 eingeführt, so daß dieser unter innerem Überdruck steht. Damit wird eine Abstützung der Wandung 14 des Formlings 10 bewirkt, auf die im Zuge des weiteren Absenkens des Formlings 15 nun axiale und auch radiale Kräfte zur Einwirkung kommen.

Da das Werkzeug 15 über den Draht 32 beheizt ist, führt der Kontakt zwischen seiner Innenwandung 18 und dem Endabschnitt 20 der Wandung 14 des Formlings 10 zu einem Wärmeübergang, in dessen Verlauf das den Endabschnitt 20 bildende thermoplastische Material eine Erweichung erfährt. In diesem Zustand ist der Endabschnitt 2o unter Anwendung relativ geringer Kräfte verformbar. Um in jedem Fall sicherzustellen, daß die Bewegung des Werkzeugs 15 nach unten über den Formling 10 und das Ausmaß der Erwärmung des Endabschnitts 20 derart aufeinander abgestimmt sind, daß das Werkzeug 15 nur entsprechend dem Ausmaß der Erwärmung und der damit bewirkten Verformbarkeit des Endabschnitt 20 über den Formling 10 sich nach unten bewegt, wird das Werkzeug 15 in der bereits beschriebenen Weise vom Kolben 22 getragen, der innerhalb des pneumatischen Zylinders 24 geführt und während des Formgebungsvorganges in Richtung auf den Formling 10 beaufschlagt ist. Diese Anordnung bewirkt eine selbsttätige Beeinflussung der auf den zu verformenden Endabschnitt 20 des Formlings und damit auch auf die anschließenden, nicht erwärmten Bereiche der Wandung 14 des Formlings 10 einwirkenden Kräfte, wobei der auf den Kolben einwirkende Druck ohne weiteres so eingestellt werden kann, daß die resultierenden Kräfte einerseits groß genug ist, den erweichten Endabschnitt 20 des Formlings 10 zu verformen, andererseits zu klein sind, um eine ungewollte Verformung des Formlings 10, insbesondere auch in dessen nicht erwärmtem Bereich, zu verursachen. Dabei spielt die bereits erwähnte Beaufschlagung des vom Formling 10 umschlossenen Innenraums mit der durch den Kanal 26 zugeführten Druckluft eine wesentliche Rolle, da diese eine Stützfunktion hat und insbesondere ein Einknicken des relativ schlanken Formlings 10 unter der Einwirkung des durch das Werkzeug 15 ausgeübten Druckes vermeidet. Gleichermaßen wird auch die Innenseite des zu verengenden Endabschnitts 20 beaufschlagt, so daß während des Formgebungsvorganges im Zuge der Absenkbewegung des Werkzeuges 15 der Endabschnitt 20 unter der Einwirkung von nach außen gerichteten Kräften steht, die über den Umfang des Endabschnitt 20 gleichmäßig verteilt sind und dazu beitragen zu verhindern, daß der Endabschnitt 20 unregelmäßig verformt wird, z. B. durch Bildung von Falten oder dgl. Die durch den inneren Überdruck verursachten, nach außen gerichteten Kräfte sind zwar kleiner als die durch die Innenwandung 18 des Werkzeugs 15 übertragenen, nach innen gerichteten Kräfte, die jedoch nur dort voll wirksam werden, wo die Innenwandung 18 unmittelbar mit dem Endabschnitt 20 des Formlings 10 in Berührung ist.

Wenngleich das Werkzeug 15 bei seiner Abwärtsbewegung über den Formling 10 zwecks Verformung von dessen Endabschnitt 20 keinen Zwangsantrieb besitzt, ist der Weg, den das Werkzeug 15 dabei zurücklegt, in geeigneter Weise, z. B. durch einen Anschlag, begrenzt. Auf diese Weise ist sichergestellt, daß an jedem Formling 10 die Formgebung des Endabschnitts 20 im ersten Behandlungsschritt in gleichem Ausmaß erfolgt unter der Voraussetzung, daß die dafür erforderliche Zeit, die im wesentlichen von der Temperatur des Werkzeugs 15 und der Wandstärke des Endabschnittes 20 bestimmt wird, zur Verfügung steht.

Am Ende des ersten Verformungsschritts weist der Formling 10 die in Fig. 2 der Zeichnung dargestellte Gestalt auf.

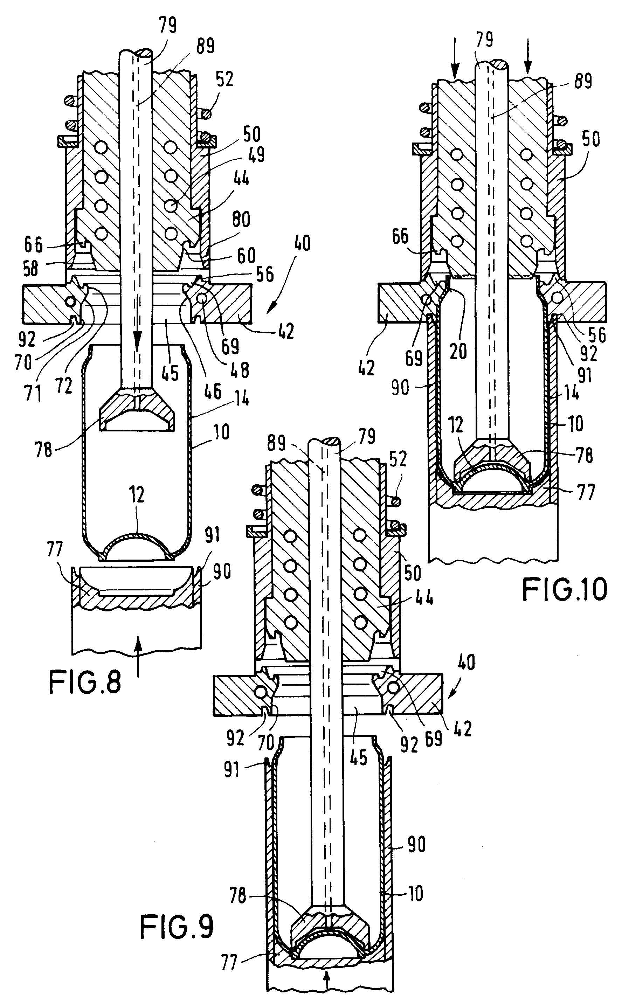

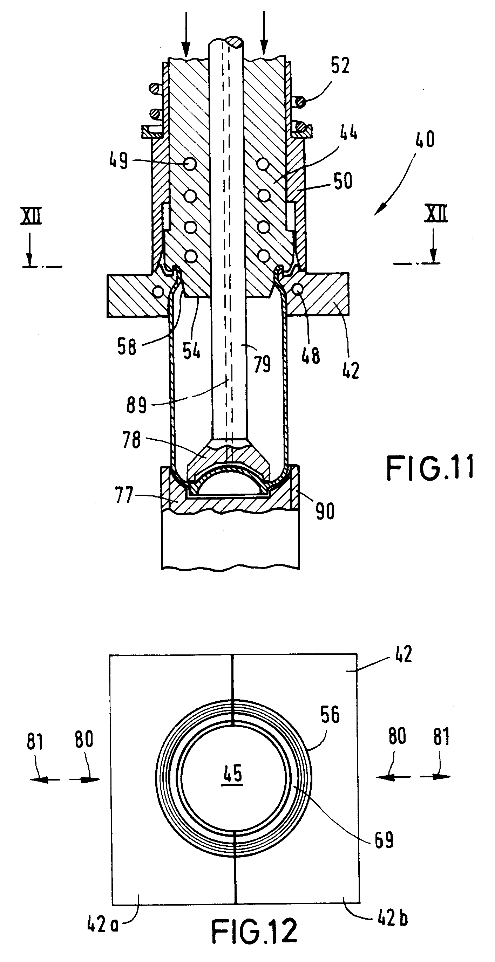

Nach Beendigung der Behandlung des Formlings 10 in der Behandlungsstation 16 wird der nun mit dem verengten Abschnitt 20 versehene Formling durch eine in der Zeichnung nicht dargestellte Transporteinrichtung in die zweite Behandlungsstation 40 gebracht (Fig. 8 - 11). In dieser Behandlungsstation 40 ist ein zweiteiliges Werkzeug angeordnet, welches aus einem Unterteil 42 und einem damit zusammenwirkenden Stempel 44 besteht. Das Unterteil ist plattenförmig ausgebildet und mit einer kreisförmigen Ausnehmung 45 versehen (Fig. 11). Die Kontur der diese Ausnehmung 45 begrenzenden Wandung 46 (Fig. 8) entspricht der endgültigen Form, die der Endabschnitt 20 in der zweiten Behandlungsstation erhalten soll. Das Unterteil 42 ist in zwei Hälften 42a, 42b unterteilt, die in horizontaler Ebene relativ gegeneinander verschiebbar sind. In den Figuren 8 bis 11 ist das Unterteil 42 des Werkzeugs 42, 44 in seiner geschlossenen Position dargestellt.

Sowohl Unterteil 42 als auch Stempel 44 sind mit Kanälen 48, 49 für den Durchgang eines Kühlmediums versehen.

Der Stempel 44 ist außenseitig von einem ringförmigen Verriegelungselement 50 umgeben, welches gegenüber dem Stempel 44 axial verschiebbar ist und durch eine Schraubenfeder 52, die sich in nicht dargestellter Weise am Stempel 44 abstützt, in Richtung auf das freie Ende 54 des Stempels 44 beaufschlagt ist. Dem ringförmigen Verriegelungselement 50 ist ein umlaufender Vorsprung 56 zugeordnet, der an der Oberseite des Unterteils 42 koaxial zu dessen Ausnehmung 45 verläuft.

Der Endabschnitt 58 des Stempels 44 ist zu seinem freien Ende hin sich konisch verjüngend ausgebildet. An diesen Endabschnitt 58 schließt sich ein im wesentlichen zylindrischer Abschnitt 60 an, der an seinem dem freien Ende 54 des Stempels 44 abgekehrten Ende sich in einen Abschnitt 62 fortsetzt, der im Längsschnitt bogenförmig derart begrenzt ist, daß er unter Vergrößerung des Außendurchmessers des Stempels in diesem Abschnitt 62 einen Verlauf aufweist, der dem gewünschten Verlauf und der gewünschten Abmessung des am Hohlkörper anzuformenden Flansches enrspricht. der bogenförmig begrenzte Abschnitt 62 ist an seiner dem etwa zylindrischen Abschnitt 60 abgekehrten Seite durch einen umlaufenden Vorsprung 66 begrenzt, dessen innere Begrenzungswandung 68 etwa achsparallel unter Bildung einer Kante, an den Abschnitt 62 stößt. Der Vorsprung 66 wirkt mit einer umlaufenden Nut 69 zusammen, die an der Oberseite des Unterteils 42 des Werkzeugs koaxial zur Ausnehmung 45 angebracht ist.

Die die Ausnehmung 45 begrenzende Wandung 46 ist in ihrem unteren Bereich im wesentlichen zylindrisch begrenzt. Der Durchmesser des Bereichs 70 entspricht dem Außendurchmesser der Wandung 14 des Formlings 10 in deren unverformt bleibendem Bereich. An diesen im wesentlichen zylindrischen Bereich 70 schließt sich ein in Richtung auf den Stempel 44 im wesentlichen konisch sich verjüngender Bereich 71 an, der dem Übergang zwischen dem unverformt gebliebenen Abschnitt der Wandung 14 des Formlings 10 und dem nach Durchführung des Behandlungsschritts in der ersten Behandlungsstation 16 engsten Bereich des Endabschnittes 20 des Formlings 10 entspricht. An diesen sich verjüngenden Bereich 71 schließt sich ein kurzer, im wesentlichen zylindrisch begrenzter Bereich 72 an, dessen Innendurchmesser dem Außendurchmesser des zylindrischen Abschnittes 60 des Stempels 44 derart angepaßt ist, daß zwischen den beiden Wandabschnitten 72 einerseits und 60 andererseits ein Ringraum verbleibt, der von dem dort befindlichen Bereich der Wandung 14 des Formlings 10 ausgefüllt wird.

Oberhalb des im wesentlichen zylindrisch begrenzten Bereiches 72 der Wandung 46 schließt sich ein Wandbereich 74 an, der im Längsschnitt in Richtung auf den Stempel 44 einen größer werdenden Durchmesser aufweist, und bezüglich seines Verlaufs und seiner Abmessung am Verlauf und Abmessung des Abschnitts 62 am Stempel angepaßt ist, wobei der Wandbereich 74 des Unterteils 42 einerseits und der Wandbereich 62 des Stempels 44 andererseits zueinander im wesentlichen parallel verlaufen und in ihrer wirksamen Endposition gemäß Fig. 15 einen Ringspalt begrenzen, dessen Breite in diesem Bereich der Dicke des an den verengten Abschnitt 20 anzuformenden Flansches 76 entspricht.

Nachdem der Formling 10 aus der ersten Behandlungsstation 16 in die zweite Behandlungsstation 40 gebracht worden ist, nimmt er zunächst die in Fig. 8 dargestellte Lage ein, wobei er von einem nicht dargestellten Haltemittel, beispielsweise einem Greifer der nicht dargestelltem Transporteinrichtung gehalten wird. Der Behandlungsstation sind zwei Haltemittel in Form eines Bodendornes 77 und eines Haltedorns 78 zugeordnet, die beide unabhängig voneinander vertikal verschiebbar sind. Die Stirnseiten sowohl des Bodendornes 77 als auch des Haltedornes 78 sind an die Form des Bodens 12 des Formlings 10 angepaßt. Der Haltedorn 78 wird von einer Stange 79 getragen, die in einer Längsbohrung des Stempels 44 diesem gegenüber axial verschiebbar ist. Beide Teile 78 und 79 sind mit einem Kanal 89 für die Zuführung von Druckluft in den Formling 10 hinein versehen. Der Bodendorn 77 ist von einer Stützhüle 90 koaxial umgeben, die gegenüber dem Bodendorn 77 vertikal verschiebbar ist.

Sobald der Formling 10 die in Fig. 8 der Zeichnung dargestellte Lage einnimmt, werden Bodendorn 77 und Haltedorn 78 jeweils in Richtung auf den Boden 12 des Formlings 10 verschoben, bis beide Teile am Boden 12 anliegen und diesen zwischen sich einklemmen. Dabei befindet sich der Formling 10 noch in einer Position, in der er sich unterhalb des Unterteiles 42 des Werkzeuges befindet. Durch das vorbeschriebene Einklemmen des Bodens 12 zwischen beiden Haltemitteln 77 und 78 erfolgt aufgrund der Form der dabei zusammenwirkenden Teile auch eine axiale Ausrichtung des Formlings 10 zum Werkzeug. Nach dem Einklemmen des Bodens 12 wird die Stützhülse 90, deren Innendurchmesser dem Außendurchmesser des Formlings 10 angepaßt ist, nach oben bis ungefähr zum Beginn des verengaten Bereichs 20 verschoben (Fig. 9), der in der ersten Behandlungsstation 16 hergestellt worden war. Aus dieser Position werden die beiden Haltemittel 77, 78 und die Stützhüle 90 synchron unter Mitnahme des Formlings 10 nach oben verschoben, bis sie die in Fig. 10 der Zeichnung dargestellte Lage erreicht haben. Das Unterteil 42 des Werkzeugs ist dabei geschlossen. Es wird in dieser Lage von unten durch die Stützhülse 90 verriegelt. Zu diesem Zweck greift ein zumindest einseitig konisch begrenzter ringförmiger Fortsatz 91 in eine entsprechend begrenzte Nut 92 des Unterteils 42 ein.

Die Zeichnung läßt erkennen, daß die Kontur des Werkzeugs 42 in den Wandbereichen 70, 71 und 72 an die Kontur des verengten Abschnitts 20 des Formlings 10 angepaßt ist, so daß letzterer mit seinem verengten Bereich 20 im Zuge der Aufwärtsbewegung der Teile 77, 78, 90 in die Ausnehmung 45 des bereits geschlossenen Unterteils 42 eingeschoben werden kann.

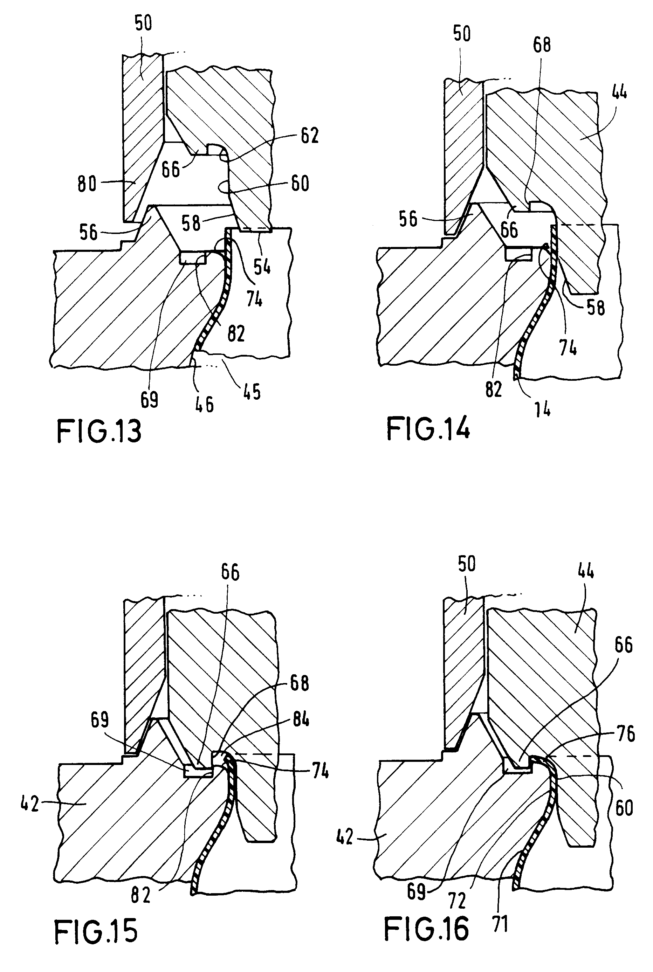

Wenn der Formling 10 die in Fig.10 dargestellte Lage einnimmt, wird der Stempel 44 aus seiner in den Fig. 9, 10 und 13 dargestellten oberen Ausgangslage nach unten in die Ausnehmung 45 des Unterteils 42 sowie in die Öffnung des dazu koaxial angeordnete Formlings 10 hineinbewegt. Insbesondere Fig. 13 der Zeichnung läßt erkennen, daß der Durchmesser des freien Endes 54 des Stempels 44 geringfügig kleiner ist als der kleinste Durchmesser des verengten Endabschnittes 20 des Formlings 10, so daß der Stempel 44 zunächst in die Öffnung des Formlings 10 eintritt, ohne die die Öffnung begrenzende Wandung zu berühren. Ggf. kann während des Einführens des konischen Endabschnittes 58 des Stempels 44 noch eine Feinausrichtung des Formlings 10 zum Stempel 44 erfolgen, wenngleich dies im allgemeinen nicht erforderlich ist, da die axiale Ausrichtung des Formlings 10 zum Unterteil 42 des Werkzeugs und damit auch zu dessen Stempel 44 beim Einführen des verengten Endabschnittes in das Unterteil 42 oder spätestens beim Hochfahren der Stützhülse 90 bewirkt wird.

Während der ersten Phase der Abwärtsbewegung des Stempels 44 wird der untere, konische Endbereich 80 des ringförmigen Verriegelungselementes 50 mit dem Vorsprung 56 ab der Oberseite des Unterteils 42 in Eingriff gebracht. Da das Verriegelungsteil 50 seine untere Endlage erreicht hat, bevor der Stempel 44 seine Abwärtsbewegung beendet, erfolgt eine Relativverschiebung zwischen Verriegelungsteil 50 und Stempel 44, wobei die Schraubenfeder 52, die mit ihrem dem Formling 10 abgekehrten Ende am Stempel 44 abgestützt ist, zusammengedrückt wird. Das Verriegelungselement 50 und der ebenfalls als Verriegelungselement wirkende Fortsatz 91 an der Stützhülse haben die Aufgabe, die beiden Hälften 42a, 42b des Unterteils 42 des Werkzeugs in der Schließlage gegeneinander zu verriegeln, so daß bei den nachfolgenden Preßvorgänge die Hälften 42a, 42b geschlossen bleiben. Dies wird aufgrund der konischen Begrenzung des Vorsprungs 56 an dessen Außenseite und der daran angepaßten konischen Begrenzung des Endbereichs 80 des Verriegelungselementes 50 und entsprechende Begrenzungen des Fortsatzes 91 an der Stützhülse 90 und damit zusammenwirkenden Nut 92 erreicht.

Im Zuge der weiteren Abwärtsbewegung des Stempels 44 gelangt dann der zylindrische Abschnitt 60 des Stempels 44 in den Endabschnitt 20 des Formlings 10. Der Außendurchmesser dieses zylindrischen Abschnitts 60 stimmt etwa überein mit dem kleinsten Innendurchmesser des verengten Bereichs 20. Nachdem der Stempel 44 etwa die Position gemäß Fig. 14 erreicht hat, wird über den Kanal 89 Druckluft in das Innere des Formlings 10 eingeführt, um ein Einknicken der Wandung 14 des Formlings 10, insbesondere in den in ersten Behandlungsstation 16 verengten Bereich 20 während des Preßformens des Flansches zu verhindern. Ein Ausbeulen des Formlings 10 nach außen ist nicht möglich, da seine Wandung durch die letztere von außen umschließende Stützhülse 90 außenseitig abgestützt wird (Fig. 10 und 11). Der innere Überdruck im Formling 10 hat weiterhin zur Folge, daß der nicht zur Bildung des Flansches 76 zu verformende Abschnitt des Bereiches 20 an die Wandung des Unterteils 42 angedrückt und durch diese gekühlt wird.

Im Zuge der weiteren Abwärtsbewegung tritt zunächst der untere Endbereich des Vorsprungs 66 in die Nut 69 ein, wie dies in Fig. 15 dargestellt ist. Dabei ist die Anordnung so getroffen, daß die innere Begrenzungswand 68 ohne oder nur mit ganz geringem Spiel an der inneren Begrenzungswandung 82 der dem Vorsprung 66 zugeordneten Nut 69 gleitet, so daß der von den beiden Wandabschnitten 62 am Stempel 44 und 75 am Unterteil 42 begrenzte Ringraum 84 allseits, also auch nach außen, abgeschlossen ist und ein Ausweichen von thermoplastischem Material aus dem verengten Endabschnitt nach außen verhindert wird. Im Zuge der weiteren Abwärtsbewegung bis in die Endposition gemäß Fig. 16 wird zwischen den beiden Abschnitten 62 und 74 der freie Rand des verengten Abschnitts 20 nach außen zur Flanschbildung umgebogen (Fig. 15), bis der Stempel 44 seine Endlage erreicht hat, in welcher das den nach außen abgebogenen, umlaufenden Flansch 56 bildende Material zwischen Unterteil 22 und Stempel 44 eine Preßformung erfährt, die nicht nur dem Umbiegen und Formen des Flansches 76 dient, sondern darüber hinaus auch, da in der Endposition des Stempels 44 ein definierter Abstand zwischen dem Wandabschnitt 62 des Stempels 44 und demWandabschitt 74 des Unterteils 42 gegeben ist, zu einer Vergleichmäßigung dieses Flansches über seinen gesamten Umfang bezüglich seiner Wandstärke und seiner radialen Erstreckung führt. Letzteres wird dadurch erreicht, daß die innere Begrenzungswand 68 des Vorsprungs 66 ein Ausweichen des der Preßformung unterliegenden Materials nach außen verhindert. Ein Ausweichendes Materials nach innen in Richtung auf den unverformt gebliebenen Wandbereich ist ebenfalls nicht oder nur in einem vernachlässigbaren Ausmaß möglich, da der Ringspalt zwischen dem zylindrischen Bereich 60 des Stempels 44 und dem zylindrischen Bereich 72 des Unterteils 42 vollständig mit Material ausgefüllt ist und aufgrund seiner geringen Breite einen so großen Strömungswiderstand aufweist, daß ein Ausweichen von Material durch diesen Ringspalt hindurch in einem ins Gewicht fallenden Ausmaß nicht möglich ist.

Das Einführen des verengten Bereiches 20 des Formlings 10 in das Unterteil 42 des Werkzeugs und das Einführen des Stempels 44 in den verengten Bereich 20 hinein erfolgen so schnell, daß vor der Formgebung des Materials zum Zwecke der Bildung des Flansches 76 eine Abkühlung des thermoplastischen Materials jedenfalls nicht in einem solchen Ausmaß eintritt, daß dadurch Verformung und Flanschbildung beeinträchtigt werden könnten. Diese beginnt in nennenswertem Ausmaß erst, nachdem der Stempel 44 seine in den Figuren 10 und 16 dargestellte Endlage erreicht hat. Aufgrund des die Kanäle 48 und 49 durchströmenden Kühlmediums, bei dem es sich im allgemeinen um Wasser handeln wird, erfolgt dann die Abkühlung auf eine Temperatur, in welcher das thermoplastische Material wieder formbeständig ist, jedenfalls so schnell, daß der fertige Formling 10, der nunmehr die Gesalt gemäß Fig. 3 aufweist, aus der zweiten Behandlungsstation 40 entfernt werden kann, wenn der gleichzeitig in der ersten Behandlungsstation 16 mit dem verengten Endabschnitt 20 versehene Formling 10 für die Weiterbehandlung in der zweiten Behandlungsstation 40 bereit steht.

Vor dem Herausführen des fertigen Formlings aus der zweiten Behandlungsstation 40 wird das Innere des Formlings durch Öffnen eines dem Kanal 89 zugeordneten Ventils druckentlastet. Dann werden zunächst Stempel 44 mit dem konischen Verriegelungselement 50 und Stützhüle 90 mit konischem Verriegelungseleent 91 nach oben bzw. nach unten bewegt und außer Eingriff mit dem Unterteil 42 gebracht. Dann wird das Unterteil 42 des Werkzeugs durch Auseinanderfahren der beiden Hälften 42a, 42b in Richtung der Pfeile 81 geöffnet, worauf der Formling 10 mit seinem angeformten Flansch 76 nach unten entformt werden kann.

Hierzu werden Bodendorn 77 und Haltedorn 78 synchron nach unten etwa in die Position gemäß Fig. 8 verfahren, in welcher der Formling dann von der bereits erwähnten Transporteinrichtung oder ggf. auch von einer anderen Transporteinrichtung erfaßt wird, worauf dann der Bodendorn 77 nach unten und der Haltedorn 78 nach oben bewegt werden, um den Formling 10 freizugeben.

Insbesondere Fig. 3 läßt erkennen, daß der Flansch 76 mit seinem freien Ende nicht über die Kontur des Hohlkörpers 10 im Bereich des größten Durchmessers der Wandung 14 nach außen vorsteht. Dies erleichtert den Transport der fertigen Formlinge, bei denen es sich durchweg um in sehr großen Stückzahlen herzustellenden und zu bearbeitenden Artikeln handelt, die demzufolge auch in großen Stückzahlen zu transportieren sind.

## Patentansprüche

1. Verfahren zum Anformen eines Flansches an einen Hohlkörper (10) aus thermoplastischem Kunststoff, dessen im wesentlichen zylindrische Wandung (14) an einem Ende eine Öffnung begrenzt und bei dem der die Öffnung begrenzende Endabschnitt (20) der Wandung (14) erwärmt und durch über den Umfang des Endabschnittes (20) von außen auf diesen einwirkende Kräfte verengt wird und danach an diesen verengten Endabschnitt (20) durch einen Preßvorgang ein umlaufender Flansch (76) angeformt wird, dadurch gekennzeichnet, daß zum Verengen des Endabschnittes (20) des Hohlkörpers (10) über den Endabschnitt (20) ein im Querschnitt im wesentlichen ringförmiges erstes Werkzeug (15) geführt wird, das in seinem den Hohlkörper (10) umfassenden Bereich in Richtung einer Längserstreckung des Hohlkörpers (10) eine geringere Ausdehnung als der Hohlkörper (10) aufweist, daß das Werkzeug auf eine zur Erwärmung des Endabschnittes (20) ausreichende Temperatur gebracht und durch ein Verschieben des Werkzeuges (15) in Richtung auf den Hohlkörper (10) etwa gleichzeitig die Erwärmung und die Verengung durchgeführt wird.

2. Verfahren nach Anspruch 1, dadurch gekennzeichnet, daß das gleichzeitige Verengen und Erwärmen des Endabschnittes (20) in Abhängigkeit vom durch das Erwärmen bewirkten Erweichen des den Endabschnitt (20) bildenden Materials erfolgt.

3. Verfahren nach Anspruch 1 oder 2, dadurch gekennzeichnet, daß die innere Kontur des Werkzeugs (15) sich entsprechend der am Endabschnitt (20) durchzuführenden Verengung zu seinem dem Hohlkörper abgekehrten Ende hin verengt, und das Werkzeug (15) unter der Einwirkung eines in Richtung auf den Hohlkörper (10) wirkenden Federmittels steht und die mit dem Endabschnitt (20) in Kontakt kommende Wandung des Werkzeugs (15) eine zum Erweichen des zu verengenden Abschnitts geeignete Temperatur aufweist und die durch das Federmittel auf das Werkzeug (15) ausgeübte Kraft so bemessen ist, daß eine das Verengen des Endbereichs (20) bewirkende Verformung erst bei Erreichen einer bestimmt Temperatur und eine dadurch bewirkte Erweichung des unter der Einwirkung des Werkzeugs (15) stehenden Endabschnitts der Wandung (14) eintritt.

4. Verfahren nach einem der Ansprüche 1 bis 3, dadurch gekennzeichnet, daß der vom Werkzeug (15) während des Verengens des Endabschnitts (20) zurückzulegende Weg begrenzt ist.

5. Verfahren nach einem der Ansprüche 1 bis 4, dadurch gekennzeichnet, daß während des die Verengung bewirkenden Arbeitsschrittes der Hohlkörper (10) unter einem inneren Überdruck steht.

6. Verfahren nach einem der Ansprüche 1 bis 5, dadurch gekennzeichnet, daß der zweite Verformungsschritt, bei welchem der Flansch (76) am verengten Endabschnitt (20) des Hohlkörpers (10) angeformt wird, unter Ausnutzung der Wärme erfolgt, die im Verlauf des ersten Arbeitsschrittes zur Verengung des Endabschnitts (20) in diesen Endabschnitt (20) eingebracht worden war.

7. Verfahren nach Anspruch 1, dadurch gekennzeichnet, daß der Hohlkörper (10) mit einem verengten Endabschnitt (20) in den Bereich eines zweiten Werkzeugs (42,44) gebracht wird, das aus einem Unterteil (42) mit einer Ausnehmung (45), deren Innenkontur an die Form des am Hohlkörper (10) anzuformenden Flansches (76) angepaßt ist, und einem Stempel (44) besteht, dessen Endbereich in die Ausnehmung (45) des Unterteils (42) und den darin befindlichen Endabschnitt (20) des Hohlkörpers (10) eingeführt wird, und der mit der Hohlkörperwandung zusammenwirkende Bereich des Stempels (44) so ausgebildet ist, daß er beim Einführen wenigstens den Randbereich des Endabschnitts (20) des Hohlkörpers (10) zunächst aufweitet und in der Endphase des Einführens der umlaufende Flansch (76) zwischen Unterteil (42) und Stempel (44) preßgeformt und der verformte Bereich des Hohlkörpers (10) soweit abgekühlt wird, daß er eine Formstabilität erhält.

8. Verfahren nach Anspruch 1, dadurch gekennzeichnet, daß das für das Anformen des Flansches verwendete Preßwerkzeug (42,44) zugleich zur Abkühlung des verformten Bereichs der Wandung (14) dient.

9. Verfahren nach Anspruch 1, dadurch gekennzeichnet, daß während des Preßformens des Flansches (76) der Hohlkörper (10) unter innerem Überdruck steht.

10. Verfahren nach Anspruch 1, dadurch gekennzeichnet, daß während des Preßformens des Flansches (76) die Hohlkörperwandung außenseitig durch eine sie umgebende Stützwandung abgestützt wird.

11. Verfahren nach Anspruch 1, dadurch gekennzeichnet, daß das Verengen des Endabschnitts (20) des Hohlkörpers (10) einerseits und das Preßformen des Flansches (76) andererseits in zwei räumlich voneinander getrennten Behandlungsstationen (16,40) durchgeführt werden.

12. Vorrichtung zum Anformen eines Flansches (76) an einen Hohlkörper (10) aus thermoplastischem Kunststoff, dessen im wesentlichen zylindrische Wandung (14) an einem Ende eine Öffnung begrenzt, bei der zum Verengen des die Öffnung begrenzenden Endabschnittes (20) der Wandung (14) ein über den Endabschnitt (20) führbares im Querschnitt ringförmiges erstes Werkzeug (15) vorgesehen ist, dessen Innendurchmesser an der dem Hohlkörper (10) zugekehrten Stirnseite mindestens so groß ist wie der Außendurchmesser des unverformten Endabschnittes des Hohlkörpers (10) und entsprechend der Kontur des verengten Endabschnittes (20) zu seiner vom Hohlkörper (10) abgekehrten Seite hin abnimmt, und bei der zur Flanschanformung ein den verengten Endabschnitt (20) teilweise wieder aufweitendes zweites Werkzeug (42,44) vorgesehen ist, dadurch gekennzeichnet, daß das Werkzeug (15) mit einer Heizeinrichtung (32) versehen ist und daß das erste Werkzeug (15) in Richtung der Längsachse des Hohlkörpers (10) in seinem den Hohlkörper (10) umfassenden Bereich eine geringere Ausdehnung als der Hohlkörper (10) aufweist.

13. Vorrichtung nach Anspruch 12, dadurch gekennzeichnet, daß das im Querschnitt ringförmige erste Werkzeug (15) zum Einführen von Druckluft in den Hohlkörper (10) an seiner dem Hohlkörper (10) abgekehrten Seite verschlossen und mit einem Kanal (26) versehen ist, der an eine Druckluftquelle anschließbar ist.

14. Vorrichtung nach Anspruch 12, dadurch gekennzeichnet, daß das im Querschnitt ringförmige erste Werkzeug (15) von der Kolbenstange (21) eines Kolbens (22) getragen wird, der innerhalb eines durch Druckluft beaufschlagten Zylinders (24) geführt ist.

15. Vorrichtung nach Anspruch 11, dadurch gekennzeichnet, daß der Druck der Druckluft im Zylinder einstellbar ist.

16. Vorrichtung nach Anspruch 12, dadurch gekennzeichnet, daß das zweite Werkzeug (42,44) aus einem Unterteil (42) mit einer kreisförmigen Ausnehmung (45), deren Wandung (71,72,74) an die endgültige Kontur des Endabschnittes (20) angepaßt ist, und einem Stempel (44) besteht, dessen dem Hohlkörper (10) zugekehrter Endbereich in die Ausnehmung (45) des Unterteils (42) und den vom Unterteil (42) umgebenen Endabschnitt (20) des Hohlkörpers (10) einführbar und so ausgebildet ist, daß er an die Kontur des Unterteils (42) angepaßt ist, welches den verengten Endabschnitt (20) des Hohlkörpers (10) außenseitig umgibt.

17. Vorrichtung nach Anspruch 12, dadurch gekennzeichnet, daß der Stempel (44) mit Mitteln (89) zum Einführen von Druckluft in den Hohlkörper versehen ist.

18. Vorrichtung nach Anspruch 12, dadurch gekennzeichnet, daß eine zum Hohlkörper (10) koaxial angeordnete Stützhülse (90) vorgesehen ist, deren Innendurchmesser an den Außendurchmesser des Hohlkörpers (10) angepaßt ist und die Hülse (90) relativ zum Hohlkörper (10) axial verschiebbar ist und in eine Position gebracht werden kann, in welcher sie die Hohlkörperwandung über zumindest den größten Teil ihrer axialen Erstreckung zum Zweck der außenseitigen Abstützung passend umgibt.

19. Vorrichtung nach Anspruch 16, dadurch gekennzeichnet daß das Unterteil (42) des Werkzeugs zum Anformen des Flansches (76) zum Zwecke des Entformens geteilt ist und am Stempel (44) diesem gegenüber axial verschiebbar ein ringförmiges Verriegelungselement (50) angebracht ist, welches im Zuge der Bewegung des Stempels (44) in Richtung auf das Unterteil (42) mit beiden Teilen (42a, 42b) des Unterteils (42) in Eingriff gebracht wird, bevor das Unterteil (42) im Zuge des Formgebungsvorgangs durch Kräfte durch den Stempel (44) beaufschlagt wird.

20. Vorrichtung nach Anspruch 12, dadurch gekennzeichnet, daß das erste, im Querschnitt ringförmige Werkzeug (15) zum Verengen des Endabschnitts (20) einerseits und das zweite Werkzeug (42,44) zum Anformen des Flansches andererseits in zwei einen vorzugsweise horizontalen Abstand voneinander aufweisenden Behandlungsstationen (16,40) angeordnet sind.

## Claims

1. A method of integrally moulding a flange on to a hollow member (10) made of thermoplastic and having a substantially cylindrical wall (14) which bounds an opening at one end, the end portion (20) of the wall (14) bounding the opening being heated and being narrowed by forces acting externally on it around the periphery of the end portion (20), after which a peripheral flange (76) is formed by a pressure operation on the narrowed end portion (20), characterised in that, for the purpose of narrowing the end portion (20) of the hollow member (10), a first tool (15) having a substantially annular cross-section is guided over the end portion (20) and the region of the tool surrounding the hollow member (10) is narrower than the hollow member (10) in the longitudinal direction thereof, and the tool is brought to a temperature sufficient to heat the end portion (20), and heating and narrowing are brought about approximately simultaneously by moving the tool (15) in the direction towards the hollow member (10).

2. A method according to claim 1, characterised in that the simultaneous narrowing and heating of the end portion (20) occur in dependence on the softening by heating of the material forming the end portion (20).

3. A method according to claim 1 or 2, characterised in that the inner contour of the tool (15) narrows at its end remote from the hollow member, corresponding to the required narrowing of the end portion (20), and the tool (15) is acted upon by a spring means operating in the direction towards the hollow member (10), and the wall of the tool (15) coming into contact with the end portion (20) has a temperature suitable for softening the portion to be narrowed, and the force exerted by the spring means on the tool (15) is given a value such that the end region (20) is not narrowed by deformation until a specific temperature is reached, resulting in softening of the end portion of the wall (14) acted upon by the tool (15).

4. A method according to any of claims 1 to 3, characterised in that the distance to be travelled by the tool (15) during the narrowing of the end portion (20) is limited.

5. A method according to any of claims 1 to 4, characterised in that during the working step of narrowing, the hollow member (10) is under internal excess pressure.

6. A method according to any of claims 1 to 5, characterised in that the second deformation step, during which the flange (76) is integrally moulded on the narrowed portion (20) of the hollow member (10), is brought about by using the heat introduced into the end portion (20) during the first working step for narrowing it.

7. A method according to claim 1, characterised in that a narrowed end portion (20) of the hollow member (10) is brought into the region of a second tool (42, 44) comprising a bottom part (42) having a recess (45) the inner contour of which matches the shape of the flange (76) to be moulded on the hollow member (10), and a punch (44) the end portion of which is introduced into the recess (45) in the bottom part (42) containing the end portion (20), and the region of the punch (44) co-operating with the hollow-member wall is shaped so that during insertion, it initially expands at least the edge region of the end portion (20) of the hollow member (10), and during the final phase of insertion the peripheral flange (76) is moulded by pressure between the bottom part (42) and the punch (44) and the deformed region of the hollow member (10) is cooled until it has dimensional stability.

8. A method according to claim 1, characterised in that the pressure tool (42, 44) for welding the flange is also used for cooling the deformed region of the wall (14).

9. A method according to claim 1, characterised in that during pressure-moulding of the flange (76), the hollow member (10) is under internal excess pressure.

10. A method according to claim 1, characterised in that during pressure-moulding of the flange (76), the hollow-member wall is externally braced by a supporting wall which surrounds it.

11. A method according to claim 1, characterised in that the end portion (20) of the hollow member (10) is narrowed on the one hand and the flange (76) is pressure-moulded on the other hand at two spatially separate processing stations (16, 40).

12. A method of integrally moulding a flange (76) on a hollow member (10) made of thermoplastic and having a substantially cylindrical wall (14) which bounds an opening at one end, a first tool (15) having an annular cross-section being provided for guiding over the end portion (20) of the wall (14) bounding the opening for the purpose of narrowing the aforementioned portion, the inner diameter of the tool, at the end facing the hollow member (10), being at least as great as the outer diameter of the end portion of the hollow member (10) before deformation, and the tool tapering towards its side remote from the hollow member (10), corresponding to the contour of the narrowed end portion (20), and a second tool (42, 44) for partly re-expanding the narrowed end portion (20) being provided for integrally moulding the flange, characterised in that the tool (15) is provided with a heating device (32) and the portion of the first tool (15) surrounding the hollow member (10) is narrower than the hollow member (10) in the direction of the longitudinal axis thereof.

13. A device according to claim 12, characterised in that the annular cross-section first tool (15) is closed at its end remote from the hollow member (10) for the purpose of introducing compressed air into the hollow member (10), and has a duct (26) for connecting to a compressed-air source.

14. A device according to claim 12, characterised in that the annular cross-section first tool (15) is supported by the piston rod (21) of a piston (22) guided inside a cylinder (24) acted upon by compressed air.

15. A device according to claim 11, characterised in that the pressure of the compressed air in the cylinder is adjustable.

16. A device according to claim 12, characterised in that the second tool (42, 44) comprises a bottom part (42) having a circular recess (45) whose wall (71, 72, 74) is adapted to the final contour of the end portion (20), and a punch (44) the end region of which facing the hollow member (10) is insertable into the recess (45) in the bottom part (42) and the end portion (20) of the hollow member (10) surrounding the bottom part (42), and is shaped so as to match the contour of the bottom part (42) which externally surrounds the narrowed end portion (20) of the hollow member (10).

17. A device according to claim 12, characterised in that the punch (44) is provided with means (89) for introducing compressed air into the hollow member.

18. A device according to claim 12, characterised in that a supporting sleeve (90) coaxial with the hollow member (10) is provided, its inner diameter matching the outer diameter of the hollow member (10), and the sleeve (90) is axially movable relative to the hollow member (10) and can be brought into a position in which it tightly surrounds the hollow-member wall over at least the major part of its axial length, for the purpose of external support.

19. A device according to claim 16, characterised in that the bottom part (42) of the tool for integrally moulding the flange (76) is divided to assist removal from the mould, and an annular locking element (50) is disposed on the punch (44) and axially movable relative to it and, during motion of the punch (44) towards the bottom part (42) is brought into engagement with both parts (42a, 42b) of the bottom part (42), before the bottom part (42) is subjected to forces by the punch (44) during the moulding process.

20. A device according to claim 12, characterised in that the annular cross-section first tool (15) for narrowing the end portion (20) on the one hand and the second tool (42, 44) for integrally moulding the flange on the other hand are disposed at two processing stations (16, 40) which are preferably at a horizontal distance from one another.

## Revendications

1. Procédé pour réaliser une collerette sur un corps creux (10) en matière thermoplastique dont la paroi sensiblement cylindrique (14) est limitée à une extrémité par une ouverture, ce procédé consistant à chauffer l'extrémité (20) de la paroi (14) contigüe à l'ouverture, à appliquer par l'extérieur des efforts sur le pourtour de cette extrémité (20) pour la rétrécir, et ensuite à mettre en forme à la presse cette extrémité rétrécie (20) pour y obtenir une collerette périphérique (76), procédé caractérisé en ce que, pour rétrécir l'extrémité (20) du corps creux (10), on applique sur cette extrémité (20) un premier outil (15) ayant une forme sensiblement de révolution, qui présente dans sa partie prévue pour entourer le corps creux (10), dans le sens de la longueur du corps creux (10), une étendue plus faible que celle du corps creux (10), en ce qu'on porte cet outil à une température suffisante pour l'échauffement de l'extrémité (20), et en ce qu'on effectue l'échauffement et le rétrécissement à peu près en même temps en faisant coulisser l'outil (15) en direction du corps creux (10) pour qu'il coiffe celui-ci.

2. Procédé selon la revendication 1, caractérisé en ce qu'on réalise simultanément le rétrécissement et l'échauffement de l'extrémité (20) en fonction du ramollissement de la matière de l'extrémité (20) obtenu par l'échauffement.

3. Procédé selon la revendication 1 ou 2, caractérisé en ce que le profil interne de l'outil (15) va en se rétrécissant en direction de son extrémité opposée au corps creux, pour correspondre au rétrécissement à réaliser sur l'extrémité (20), en ce que l'outil (15) est soumis à l'effet d'un système élastique agissant en direction du corps creux (10), la paroi de l'outil (15) qui vient au contact de l'extrémité (20) présentant une température appropriée pour le ramollissement de la partie à rétrécir, et en ce que l'effort exercé sur l'outil (15) par le système élastique est calculé pour provoquer une déformation qui entraîne le rétrécissement de l'extrémité (20), seulement lorsqu'on atteint une température déterminée, et que se produit de ce fait un ramollissement de l'extrémité de la paroi (14) soumise à l'action de l'outil (15).

4. Procédé selon l'une des revendications 1 à 3, caractérisé en ce que la course de l'outil (15) est limitée pendant le rétrécissement de l'extrémité (20).

5. Procédé selon l'une des revendications 1 à 4, caractérisé en ce que le corps creux (10) est soumis à une surpression pendant l'opération de rétrécissement.

6. Procédé selon l'une des revendications 1 à 5, caractérisé en ce qu'on effectue à chaud la deuxième phase de mise en forme pendant laquelle on réalise la collerette (76) sur l'extrémité rétrécie (20) du corps creux (10), en utilisant la chaleur mise en oeuvre au cours de la première phase de travail pour assurer le rétrécissement de l'extrémité (20) et qui est appliquée à cette extrémité (20).

7. Procédé selon la revendication 1, caractérisé en ce qu'on amène le corps creux (10) pourvu d'une extrémité rétrécie (20) en regard d'un deuxième outil (42,44), constitué par une matrice (42) où est ménagé un évidement (45) dont le contour interne est adapté à la forme de la collerette (76) à réaliser sur le corps creux (10), et par un poinçon (44) dont on introduit la tête dans l'évidement (45) de la matrice (42) et dans l'extrémité (20) du corps creux (10) placée dans cet évidement, et en ce que la partie du poinçon (44) qui coopère avec la paroi du corps creux est réalisée de manière à assurer d'abord l'élargissement d'au moins la bordure de l'extrémité (20) du corps creux (10) au moment de l'introduction du poinçon, et à assurer pendant la phase finale de l'introduction la mise en forme de la collerette périphérique (76), par emboutissage entre la matrice (42) et le poinçon (44), la zone mise en forme du corps creux (10) subissant de ce fait un refroidissement qui lui procure une stabilité de forme.

8. Procédé selon la revendication 1, caractérisé en ce que l'outil de presse (42,44) utilisé pour la mise en forme de la collerette sert en même temps à refroidir la zone mise en forme de la paroi (14).

9. Procédé selon la revendication 1, caractérisé en ce que, pendant la mise en forme à la presse de la collerette (76), on soumet le corps creux (10) à une surpression.

10. Procédé selon la revendication 1, caractérisé en ce que pendant la mise en forme à la presse de la collerette (76), on soutient extérieurement la paroi du corps creux au moyen d'une paroi d'appui qui l'entoure.

11. Procédé selon la revendication 1, caractérisé en ce qu'on effectue le rétrécissement de l'extrémité (20) du corps creux (10), d'une part, et la mise en forme à la presse de la collerette (76), d'autre part, dans deux postes de traitement (16,40) qui sont séparés et disposés à une certaine distance l'un de l'autre.

12. Dispositif pour réaliser la mise en forme d'une collerette (76) sur un corps creux (10) en matière thermoplastique ayant une paroi sensiblement cylindrique (14) limitée par une ouverture à l'endroit de l'une de ses extrémités, ce dispositif comportant, pour effectuer le rétrécissement de l'extrémité (20) de la paroi (14) où se trouve l'ouverture, un premier outil (15) ayant une forme de révolution et qu'on peut amener sur l'extrémité (20) pour coiffer celle-ci, le diamètre interne de la face de cet outil en regard du corps creux étant au moins aussi grand que le diamètre externe de l'extrémité du corps creux (10) avant sa mise en forme, et présentant un profil qui va en se rétrécissant du côté opposé au corps creux (10) pour épouser le contour de l'extrémité rétrécie (20), un deuxième outil (42,44) étant prévu pour réaliser la mise en forme de la collerette, en élargissant à nouveau partiellement l'extrémité rétrécie (20), caractérisé en ce que l'outil (15) est pourvu d'un système de chauffage (32), et en ce que ce premier outil (15), dans le sens de l'axe longitudinal du corps creux et à l'endroit de sa partie qui entoure le corps creux (10), présente une étendue plus faible que celle dudit corps creux (10).

13. Dispositif selon la revendication 12, caractérisé en ce que le premier outil (15) qui a une forme de révolution est fermé du côté opposé au corps creux (10), et pourvu d'un canal (26) pouvant être raccordé à une source d'air comprimé, pour introduire de l'air comprimé dans le corps creux (10).

14. Dispositif selon la revendication 12, caractérisé en ce que le premier outil (15) qui a une forme de révolution est porté par la tige (21) d'un piston (22) monté dans un cylindre (24) où l'on peut envoyer de l'air comprime.

15. Dispositif selon la revendication 14, caractérisé en ce que la pression de l'air comprimé envoyé dans le cylindre est réglable.

16. Dispositif selon la revendication 12, caractérisé en ce que le deuxième outil (42,44) est constitué par une matrice (42) présentant un évidement circulaire (45) dont la face externe est adaptée au contour définitif de l'extrémité (20), et par un poinçon (44) dont la tête dirigée en regard du corps creux (10) est prévue pour être introduite dans l'évidement (45) de la matrice (42) et dans l'extrémité (20) du corps creux (10) qui est entourée par la matrice (42), la tête du poinçon étant réalisée pour correspondre au contour de la matrice (42) qui entoure extérieurement l'extrémité rétrécie (20) du corps creux (10).

17. Dispositif selon la revendication 12, caractérisé en ce que le poinçon (44) comporte un système (89) pour introduire de l'air comprimé dans le corps creux (10).

18. Dispositif selon la revendication 12, caractérisé en ce qu'il comporte une douille d'appui (90) coaxiale au corps creux (10) et dont le diamètre interne est adapté au diamètre externe du corps creux (10), cette douille d'appui (90) pouvant coulisser axialement par rapport au corps creux (10) et être ainsi amenée dans une position où elle entoure le corps creux avec un ajustement étroit, au moins sur la plus grande partie de son étendue axiale, afin de soutenir le corps creux par l'extérieur.

19. Dispositif selon la revencation 16, caractérisé en ce que la matrice (42) de l'outil prévu pour la mise en forme de la collerette (76) est réalisée en deux parties pour permettre le démoulage, un organe de verrouillage annulaire (50) monté sur le poinçon (44) étant prévu pour coulisser dans le sens axial sur le poinçon (44), et pour venir en prise sur les deux parties (42a,42b) de la matrice (42) pendant le mouvement du poinçon (44) en direction de la matrice (42), avant que la matrice (42) subisse les efforts introduits par le poinçon (44) au cours de l'opération de mise en forme.

20. Dispositif selon la revendication 12, caractérisé en ce que le premier outil (15) qui a une forme de révolution prévue pour assurer le rétrécissement de l'extrémité (20), d'une part, et le deuxième outil (42,44) prévu pour assurer la mise en forme de la collerette, d'autre part, sont disposés dans deux postes de traitement (16,40) éloignés de préférence l'un de l'autre d'une certaine distance dans le plan horizontal.
